# EUROPEAN PATENT APPLICATION

(11) **EP 4 664 430 A1**
(43) Date of publication of application: **17.12.2025**
(21) Application number: 24182041.4
(22) Date of filing: 13.06.2024
(51) Int. Cl.: G07C 9/00, B60R 25/24, H04L 9/08

(54) **VEHICLE, APPARATUS, DATA CARRIER, COMPUTER PROGRAM, AND METHOD FOR ROLLING-CODE BASED AUTHENTICATION**

(71) Applicant: AUMOVIO Germany GmbH, 60488 Frankfurt am Main (DE)
(72) Inventor: Park, KwangShin, Seongnam-si, Gyeonggi-do 463-400 (KR)
(74) Representative: Aumovio Corporation

(57) **Abstract**

Embodiments of the present disclosure relate to a concept/approach for rolling code-based authentication. In particular, embodiments relate to a method for protection of rolling code-based authentication against attacks. The method comprises receiving a first rolling code counter from a transmitter and incrementing the rolling code counter of the receiver in response to the reception of the first rolling code counter. Further, the method comprises receiving, from the transmitter, a second rolling code counter which is further ahead of the incremented rolling code counter in counting direction than expected (by the receiver). Also, the method comprises updating the incremented rolling code counter of the receiver based on the second rolling code counter.

## Description

Embodiments of the present disclosure relate to a concept/approach for rolling code-based authentication. In particular, embodiments relate to a concept for protection of rolling code-based authentication against attacks.

Rolling code-based authentication may be applied in various fields of technology. In particular, such authentication may be used for communication, e.g., for verifying a transmitter's authenticity to a receiver. In practice, rolling code-based authentication may be used for remote access or keyless entry systems (e.g., for locking/unlocking a door of a vehicle or a house).

In existing remote keyless entry (RKE) system, a rolling code (RC) is increased or incremented with every (successful) authentication. So, e.g., the rolling code may be incremented every time a respective button of a key fob is pressed. In this way, outdated rolling codes are invalid and cannot be used for replay attacks. Thus, a BCM (Body Control Module) involved in the keyless entry system can ignore replayed RKE RF (radiofrequency) frame in case RC in the frame (from the transmitter/key fob) is old/outdated (e.g., smaller or equal then the RC of the receiver/BCM) value than expected.

However, so called rolljam attacks can trick this RC increment method by jamming and capturing subsequent RKE (Unlock) RF frames consecutively 2 times(#1 and #2) then firstly replay #1 then replay #2 later on after a user locked the vehicle by a passive way (e.g., PASE (Passive Start and Entry) Lock or using a mechanical lock mechanism) and moves away from the vehicle. In this case, the vehicle can be unlocked by replaying #2 because RC in #1 was accepted in the BCM and RC in #2 is also valid unless there was another RKE RF frame reception.

Hence, there is a demand for a concept for protection against such rolljam attacks.

This demand may be satisfied by the subject-matter of the appended independent claims. Optional embodiments are disclosed by the appended dependent claims.

Embodiments provide a method for rolling code-based authentication. The method comprises receiving a first rolling code counter from a transmitter and incrementing the rolling code counter of the receiver in response to the reception of the first rolling code counter. Further, the method comprises receiving, from the transmitter, a second rolling code counter which is further ahead of the incremented rolling code counter in counting direction than expected (by the receiver). Also, the method comprises updating the incremented rolling code counter of the receiver based on the second rolling code counter. In this way, and intercepted rolling code counter will become outdated and invalid such that rolljam attacks based on intercepted rolling code counters will fail. So, the proposed approach particularly provides a higher level of security for rolling code-based authentication schemes.

In some embodiments, the method further comprises checking if the second rolling code counter is within a predefined range of the first rolling code counter in counting direction. In such embodiments, the first rolling code counter may be updated if the second rolling code counter is within the predefined range. In doing so, the number of valid second rolling code counters may be limited for a higher security.

In practice, updating the incremented rolling code counter may comprise aligning the rolling code counter of the receiver with the second rolling code counter. In this way, the rolling code counters of the transmitter and the receiver are aligned again in the event that an attacker intercepted rolling code counters in between (between the communication of first and the second rolling code counter).

A skilled person having benefit from the present disclosure will appreciate that the proposed approach may be applied separately or in context/in the course of other communication processes between the transmitter and the receiver.

In practice, the second rolling code counter may be received in an authentication process for verifying the authenticity of the transmitter. In such embodiments, the incremented rolling code counter may be updated if the transmitters' authenticity is successfully verified. Otherwise, if the authentication process fails, the rolling code counter of the receiver may not be updated. This may ensure, that the second rolling code counter comes from an authorized entity/transmitter.

The skilled person will appreciate, that we updated rolling code counter may be further used for authentication (of the transmitter).

Accordingly, the method may further comprise receiving a third rolling code counter and comparing the third rolling code counter to the updated rolling code counter for verification. In this way, it may be ensured that the authentication of authorized entities (e.g., an authorized transmitter) may still work after a rolljam attack.

For example, the verification is successful if the third rolling code counter matches the updated rolling code counter and is unsuccessful if the third rolling code counter differs from the updated rolling code counter.

As the skilled person will also appreciate, the proposed approach may be applied in different applications including communication applications, automotive applications, and/or for controlling cyber physical systems (e.g., keyless or remote access systems).

Accordingly, in some embodiments, the method is applied for controlling a cyber physical system. In such embodiments, e.g., controlling the cyber physical system is allowed if the verification is successful and is denied if the verification is unsuccessful. So, e.g., in keyless access systems, locking/unlocking a door may be allowed if the verification is successful and vice versa. In such applications, the proposed approach may particularly provide a higher security for the cyber physical system, e.g., that on authorized attackers may not gain control over the cyber physical system through a rolljam attack.

In some embodiments, the cyber physical system comprises a cyber physical system for controlling a vehicle from remote. For example, the cyber physical system comprises a system for locking and/or unlocking one or more doors of the vehicle.

It is noted that the proposed method may be mutatis mutandis implemented in other kinds of embodiments.

Further embodiments provide a computer program comprising instructions which, when the computer program is executed by a computer, cause the computer to carry out the proposed method.

Other embodiments provide a computer-readable data carrier having stored thereon the proposed computer program.

Further embodiments provide an apparatus comprising one or more interfaces for communication and a data processing circuit configured to execute the proposed method.

Still further embodiments provide a vehicle comprising the proposed apparatus.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 schematically illustrates a rolljam attack scenario;
Fig. 2 shows a flow chart schematically illustrating an embodiment of a method for rolling code-based authentication;
Fig. 3 shows an automotive application of the proposed approach;
Fig. 4 shows a flow chart schematically illustrating an exemplary action flow according to the proposed approach; and
Fig. 5 shows a block diagram schematically illustrating an apparatus according to the proposed approach.

Rolling code-based authentication is a widely used security mechanism used primarily in remote keyless entry systems, such as those for cars and garage doors, to prevent replay attacks. Replay attacks occur when an attacker captures a transmission and later replays it to gain unauthorized access. A rolling code system prevents this by ensuring that each code transmitted is unique and can only be used once.

Rolling code-based authentication uses synchronized Counters. For example, in practice, a (remote) transmitter (e.g., a key fob) and a receiver (e.g., a vehicle or a garage door opener) both have synchronized counters that start at the same value and increment with each use.

When a button on the transmitter is pressed, it combines a current rolling code counter (value) with a secret cryptographic key using a hash function or encryption algorithm to generate a unique rolling code. This rolling code counter is then transmitted to the receiver. The receiver, upon receiving the code, performs the same cryptographic process using its current counter value and secret key to generate the expected rolling code. If the received code matches the expected code, access is granted. The receiver then increments its counter to stay synchronized with the transmitter.

The secret cryptographic key can be a pre-shared secret key known only to the transmitter and receiver. The rolling code counter, e.g., is a value that is incremented each time the transmitter is used.

Rolling code-based authentication provides various benefits including:
So, rolling code in rolling code-based authentication may ensure that each authentication attempt uses a unique, non-reusable code, enhancing security against replay attacks. This system is widely used in automotive security and other remote entry systems to provide a robust and reliable authentication mechanism.

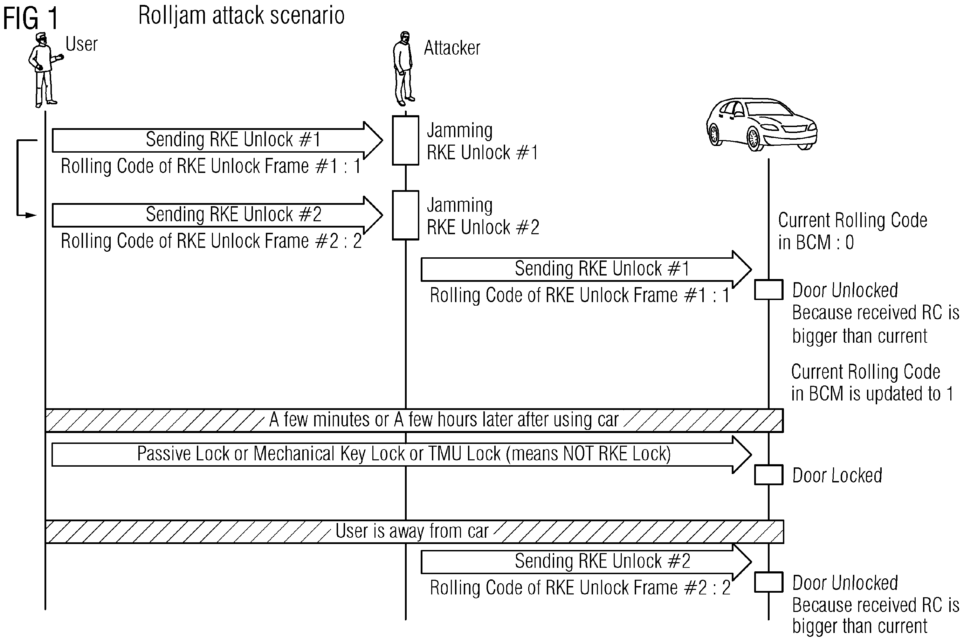

However, rolling code-based authentication may allow unauthorized access in particular replay attack scenarios, as laid out in Fig. 1 in more detail.

In the shown scenario, a user wants to unlock a vehicle using remote keyless entry (RKE) supporting rolling code-based authentication. Accordingly, the user operates a key fob or any other mobile device to emits a current rolling code counter #1, also referred to herein as RKE unlock frame. This rolling code counter #1 is intercepted by an attacker. So, the attempt to unlock the vehicle may fail. For this reason, the user emits another rolling code counter #2 which is again intercepted by the attacker. However, the attacker forwards the rolling code counter #1 to the vehicle to unlock the door so that the user assumes that the second unlocking attempt worked. In doing so, the rolling code counter of the vehicle is incremented from 0 to 1 for authentication of the rolling code counter #2.

Later, the user may park and leave the car without any prior rolling code counter re-synchronization of the key fob and the vehicle. In practice, the user, e.g., may use a mechanical mechanism to lock the vehicle.

As visualize, the attacker may, therefore, unlock the vehicle using the intercepted rolling code counter #2 to gain access to the vehicle.

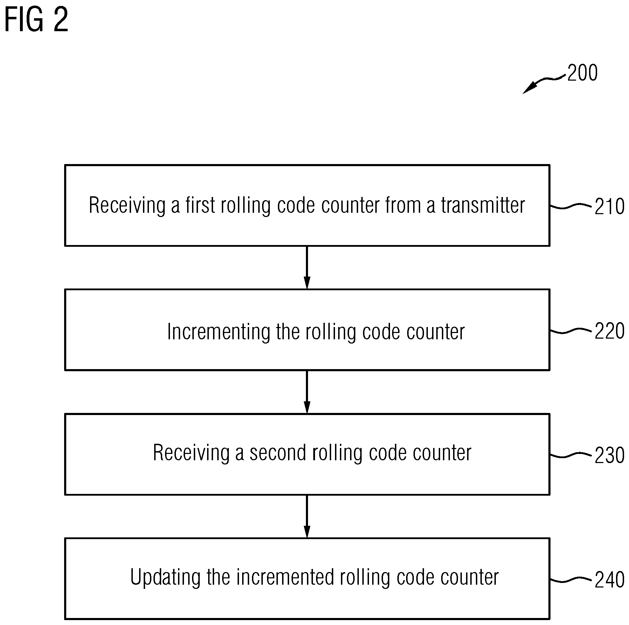

The present disclosure provides a solution for protection against role jam attacks in such scenarios, as laid out in more detail below with reference to Fig. 2.

Fig. 2 shows a flow chart schematically illustrating an embodiment of a method 200 for rolling code-based authentication.

It is noted that, even though, the present disclosure may refer to specific applications (automotive, smart home, etc.) for the sake of comprehensibility, embodiments of the present disclosure may be applied in various other applications where rolling code-based authentication may be or is applied.

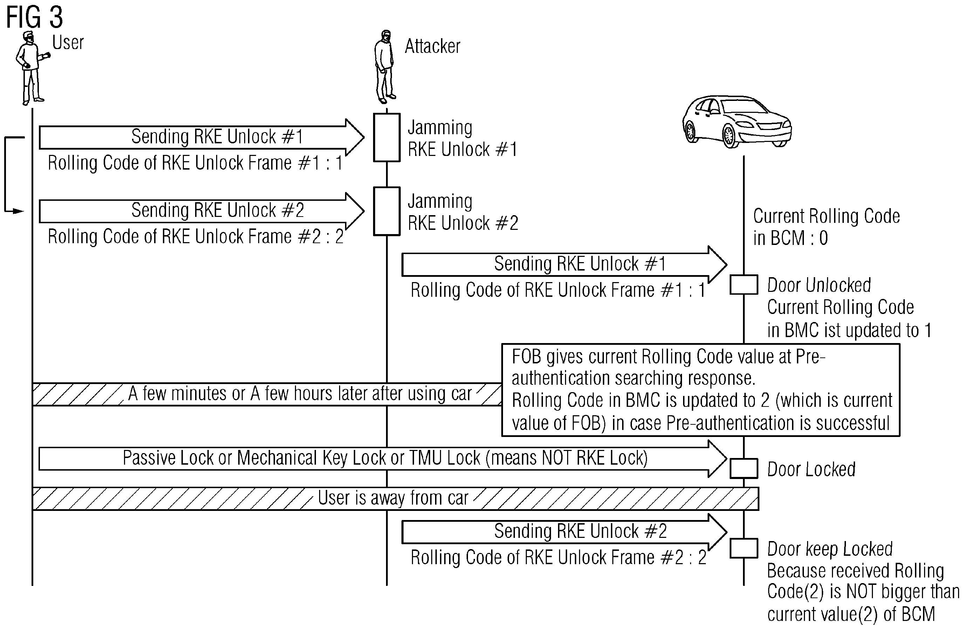

As visualized, the method 200 may comprise multiple method steps including receiving 210 a first rolling code counter from a (authorized) transmitter (in the present rolljam attack scenario indirectly via the attacker). Referring to the above role jam attack scenario and Fig. 3 referring to a respective example of a rolljam attack defense scenario, the first rolling code counter, e.g., corresponds to the rolling code counter #1 which may have the value 1.

In accordance with the principle of rolling code-based authentication, the method 200 includes incrementing 220 the rolling code counter of the receiver in response to the reception of the first rolling code counter. For this, the receiver/vehicle may verify that the first rolling code counter in comparison with the receiver's/vehicle's rolling code counter. In the present example, the vehicle's/receiver's current rolling code counter is 0. So, in accordance with rolling code-based authentication a rolling code counter with the value 1 is expected for a successful authentication. As in the explained attack scenario, the attacker forwards the first rolling code counter #1 with the value 1. So, as explained with reference to the above rolljam attack scenario, the authentication based on the first rolling code counter is successful and the receiver's rolling code counter may be incremented, e.g., from 0 to 1.

The method 200 further includes receiving 230, from the transmitter, a second rolling code counter which is (further) ahead of the incremented rolling code counter in counting direction (than expected). In this context, "further ahead" may be understood such that the receiver actually expects a preceding rolling code counter in a predefined series of rolling quote counters for the rolling code-based authentication.

In the present automotive example, e.g., a pre-authentication is executed in context of a searching response from the key fob/transmitter to the vehicle/receiver. In doing so, the second rolling code counter of the key fob/transmitter is shared with the vehicle/receiver.

In the pre-authentication, the vehicle/receiver compares the second rolling code counter of the key fob/transmitter with a current rolling code counter of the vehicle/receiver. In the present rolljam attack scenario, the key fob's/transmitter's rolling code counter may be incremented or often than expected by the vehicle/receiver. In the present attack scenario, the second rolling code counter may have the value 3 while the receiver/vehicle expects the value 2.

Method 200, therefore, suggests updating 240 the incremented rolling code counter of the receiver based on the second rolling code counter. For example, the vehicle's/receiver's rolling code counter is further incremented from the value 1 to 2.

In other words, embodiments of method 200 suggest applying rolling code-based authentication in a first application (e.g., RKE), comparing the receiver's and the transmitter's rolling code counter in the course of a second application (e.g., search, presence detection, etc.) to determine a deviation of the rolling code counters, and re-synchronizing (see step 230 and 240) the receiver's rolling code counter with the (authorized) transmitter's rolling code counter when a (unexpected/undesired) deviation between the rolling code counters of the receiver and the transmitter is recognized.

In practice, the second application comprises a communication between the receiver and transmitter which is executed on a regular basis and/or each time the user accesses, starts, and/or rides/drives the vehicle (e.g., when the user opens the door or presses the brake of the vehicle).

So, the proposed method (new logic) provides a solution for defending the vehicle from rolljam attacks by synchronization of the rolling code counters, wherein the synchronization may not only be done in the course of the application where the rolling code-based authentication is applied (e.g., at RKE RF frame reception) but also/alternatively in the course of another application (e.g., at PASE (Passive Authentication) RF frame reception).

In this way, the rolling code counter #2 becomes invalid/outdated before the attacker may use it for abusive purposes, e.g., to gain access to the vehicle (provided that the synchronization is executed before the rolling court counter #2 is used by the attacker, e.g., that the user performs the PASE action 'Pre-authentication' at least once between locking/unlocking the vehicle (by RKE) and leaving car. Therefore, the rolljam attack, as explained in Fig. 1, will fail (see Fig. 3).

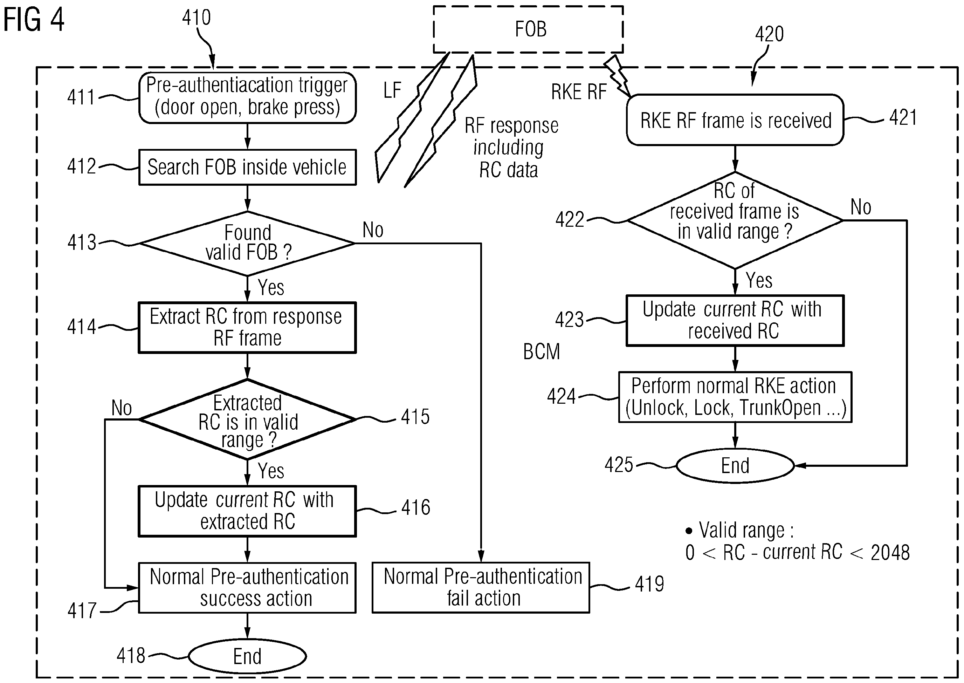

It is noted that the communication of the second rolling code counter may be applied in the course of various other applications which may not implement rolling code-based authentication. In embodiments, the proposed method may be applied for the protection of an (first) application for controlling a cyber physical system (e.g., the vehicle or a garage/house door) and the other application may be, e.g., for searching or detecting the transmitter in the proximity of the receiver, as laid out in more detail below with reference to Fig. 4.

In the scenario of Fig. 4, a key fob ("FOB" or "Key FOB") acts as transmitter and a body control module ("BCM") acts as a receiver.

As shown by Fig. 4, the re-synchronization may be done in the course of another application (see left flow chart 410) or in the course of rolling code-based authentication (see right flow chart 420 and steps 421 to 425).

In the shown scenario, the other application, e.g., is a keyless go application (e.g., passive start and entry (PASE)).

The other application may include a pre-authentication where the transmitter's and the receiver's rolling code counters are compared and re-synchronized, if necessary.

The pre-authentication may be triggered by any user action (which may happen frequently) (see step 411). In the present case, the pre-authentication, e.g., is triggered when the user opens the door or presses the brake.

In connection with the keyless go application, this for example, triggers a check if the FOB is inside the vehicle (see step 412). As the skilled person will understand, this may include communication between the transmitter and receiver. Such communication, e.g., includes a search-response-mechanism to check if a valid FOB is found (see step 413). If no valid FOB is found, the pre-authentication may fail (see step 419). Otherwise, the receiver proceeds with the pre-authentication.

For this, the key FOB may add current RC data indicating the current rolling code counter to its RF response for pre-authentication. In some embodiments, The RC data is an encrypted value, e.g., encrypted by PASE Secret Key to not expose actual RC value in the RF response.

The receiver (BCM) extracts the rolling code counter from the RF response (see step 414). In doing so, the receiver, e.g., decrypts the received RC data and compares it with an expected RC value at reception of Pre-authentication RF response.

Then, the receiver checks if the received rolling code counter is as expected in comparison with the receiver's current rolling code counter. If so, the pre-authentication is successful (see step 417).

If the received rolling code counter is not as expected but at least in a valid (predefined) range of the receiver's current rolling code counter, the transmitter's authenticity is verified successfully, and the receiver's rolling code counter re-synchronized with the rolling code counter received from the transmitter (see step 416) followed by a successful pre-authentication (see step 417). In doing so, the rolling code counter of the receiver is aligned with the transmitter's rolling code counter. Subsequently, the pre-authentication is completed (see step 418).

In doing so, intercepted rolling code counters (e.g., rolling code counter #2, see Figs. 1 & 3) become invalid (expected RC is bigger value than RC #2 already in BCM) -> the vehicle is not unlocked by replayed #2.

Afterwards, the re-synchronized rolling code counters may be used as usual in further rolling code-based authentications.

In practice, the pre-authentication may be executed in connection with various PASE searching actions (e.g. Welcome light searching or Passive Lock searching) which can be executed between the vehicle is unlocked (by RKE) and leaving the vehicle. Also, the pre-authentication may be executed in connection with other applications (other than PASE) which include communication between the receiver and the transmitter.

It is further noted that various encryption approaches may be used for the encryption of the rolling code counter. For example, instead of the secret key for PASE, other secret keys (e.g., Immobilizer Secret Key or RKE Secret Key) which may be shared among the transmitter FOB and the receiver (e.g., during learning) can be used for encryption/decryption of the rolling code counter.

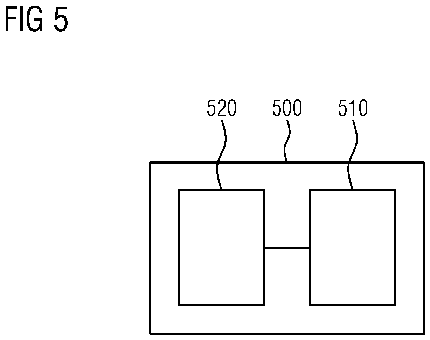

The proposed approach may be similarly applied in an apparatus, as laid out in more detail below with reference to Fig. 5.

Fig. 5 shows a block diagram schematically illustrating an embodiment of such an apparatus 500. The apparatus comprises one or more interfaces 510 for communication and a data processing circuit 520 configured to execute the proposed method.

In embodiments, the one or more interfaces 510 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 520 may correspond to or comprise any type of programable hardware. So, examples of the data processing circuit 520, e.g., comprise a memory, microcontroller, field programable gate arrays, one or more central, and/or graphical processing units. To execute the proposed method, the data processing circuit 520 may be configured to access or retrieve an appropriate computer program for the execution of the proposed method from a memory of the data processing circuit 520 or a separate memory which is communicatively coupled to the data processing circuit 520.

In practice, the apparatus may comprise or correspond to a component of a receiver. Skilled person will appreciate that such apparatus may be applied in various applications including particularly but not exclusively said automotive or smart home applications.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (200) for rolling code-based authentication, the method (200) comprising:
receiving (210) a first rolling code counter from a transmitter;
incrementing (220) the rolling code counter of the receiver in response to the reception of the first rolling code counter;
receiving (230) a second rolling code counter from the transmitter, wherein the second rolling code counter is further ahead of the incremented rolling code counter in counting direction than expected; and
updating (240) the incremented rolling code counter of the receiver based on the second rolling code counter.

2. The method (200) of claim 1, wherein the method (200) further comprises checking if the second rolling code counter is within a predefined range of the first rolling code counter in counting direction, and wherein the first rolling code counter is updated if the second rolling code counter is within the predefined range.

3. The method (200) of claim 1 or 2, wherein updating (240) the incremented rolling code counter comprises aligning the rolling code counter of the receiver with the second rolling code counter.

4. The method (200) of any one of the preceding claims, wherein receiving (230) the second rolling code counter comprises receiving the second rolling code counter in an authentication process for verifying the authenticity of the transmitter, and wherein the incremented rolling code counter is updated if the transmitters' authenticity is successfully verified.

5. The method (200) of any one of the preceding claims, wherein the method (200) further comprises:
receiving a third rolling code counter; and
comparing the third rolling code counter to the updated rolling code counter for verification.

6. The method (200) of claim 5, wherein the verification is successful if the third rolling code counter matches the updated rolling code counter and is unsuccessful if the third rolling code counter differs from the updated rolling code counter.

7. The method (200) of claim 6, wherein the method (200) is applied for controlling a cyber physical system, and wherein controlling the cyber physical system is allowed if the verification is successful and is denied if the verification is unsuccessful.

8. The method (200) of claim 7, wherein the cyber physical system comprises a cyber physical system for controlling a vehicle from remote.

9. The method (200) of claim 8, wherein the cyber physical system comprises a system for locking and/or unlocking one or more doors of the vehicle.

10. A computer program comprising instructions which, when the computer program is executed by a computer, cause the computer to carry out the method (200) of any one of the claims 1 to 9.

11. A computer-readable data carrier having stored thereon the computer program of claim 10.

12. An apparatus (500) comprising:
one or more interfaces (510) for communication; and
a data processing circuit (520) configured to execute the method (200) of any one of the claims 1 to 9.

13. A vehicle comprising the apparatus of claim 12.
